# EUROPEAN PATENT APPLICATION

(11) **EP 4 477 873 A1**
(43) Date of publication of application: **18.12.2024**
(21) Application number: 23382589.2
(22) Date of filing: 14.06.2023
(51) Int. Cl.: F03D 7/04, H02J 3/38

(54) **METHODS FOR OPERATING WIND FARMS**

(71) Applicant: General Electric Renovables España S.L., 08005 Barcelona (ES)
(72) Inventor: KOLWALKAR, Amol, 560066 Bengaluru (IN); P, Veena, 560066 Bengaluru (IN); C, Santhosh Kumar, 560066 Bengaluru (IN)
(74) Representative: Bardehle Pagenberg S.L.

(57) **Abstract**

The present disclosure relates to methods (100, 200) for operating in wind farm grids (108) of wind farms (105) which are electrically disconnected from a utility grid (102), for example wherein communication with a wind farm controller (109) has been lost. The present disclosure further relates to wind farms (105), wind farm grids (108) and wind turbines (10). A method (100) comprises operating one or more first wind turbines (111) to generate electrical power with predetermined electrical characteristics when the wind farm (105) is disconnected from a utility grid (102), and delivering the electrical power with the predetermined electrical characteristics to the wind farm grid (108); and one or more second wind turbines (112) detecting (120) the electrical power delivered to the wind farm grid (108) and determining that the wind farm (105) is disconnected from the utility grid (102) by identifying the predetermined electrical characteristics.

## Description

The present disclosure relates to methods for forming local grids, and operating in wind farm grids of wind farms which are electrically disconnected from a utility grid. More particularly, the present disclosure relates to such wind farm grids, wherein communication between wind turbines and/or communication of a wind turbine with a wind farm controller has been lost. The present disclosure further relates to wind farms and wind turbines.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

While a wind turbine is disconnected from the grid, some relevant auxiliary systems, e.g. communication systems and ventilation and temperature regulation systems, may keep operating until electric power provided by auxiliary power sources such as battery-based systems, supercapacitors such as uninterruptible power supplies (UPSs), or diesel generators run out of power as well. Solar panels may also be used to provide auxiliary power. Another way to obtain auxiliary power may include operating the wind turbine in order to generate a small amount of electric power and supplying the generated electric power to one or more auxiliary systems.

The present disclosure particularly relates to a wind farm, or a section of a wind farm, being in an island mode, i.e. a situation in which the wind farm grid is disconnected from a public utility grid, and wherein one or more wind turbines are operated to supply power to auxiliary systems. These auxiliary systems may be systems that belong to the wind turbines generating power or may be systems that belong to other wind turbines connected to the same grid.

To enter an island mode, one or more wind turbines of the wind farm may be configured to be grid forming wind turbines. I.e., when disconnection from the electrical grid is detected, these grid forming turbines may act as leaders and be the first ones to start operating in island mode. The remaining wind turbines of the island will be following the leading wind turbines, i.e. they will be followers or non-grid forming wind turbines. When the "island" is formed, the wind turbines belonging to the island will be electrically connected among them, e.g. an island may have a plurality of energized and interconnected strings, and a plurality of wind turbines being connected to each of the energized strings. In other words, a local grid electrically connecting leading and following wind turbines is formed.

The non-grid forming wind turbines need to know whether the grid that is present at their terminals is the utility grid or the local grid. If the voltage that they register at their terminals is provided by the utility grid, and wind conditions allow, the wind turbines would attempt to start-up and inject power. However, if the wind farm is in island mode and a wind turbine provides the voltage that another wind turbine detects at its terminals, the wind turbines should not start-up because the electrical power that they may generate cannot be supplied to the utility grid, and could result in over generation leading to unstable operation of the island.

During, or after the formation of the island, the wind farm controller usually communicates with each wind turbine, in particular to their wind turbine controllers, to indicate this. Thanks to this communication, the grid following or non-grid forming wind turbines know if the grid that is present at their terminals is the utility grid or the local grid.

However, if communication between the wind farm controller and one or more non-grid forming wind turbines is lost, these wind turbines will not be able to identify what grid is present at its terminals, and/or in which mode they should be operating.

The present disclosure aims to enable non-grid forming wind turbines to discern whether they are electrically connected to a locally formed grid or to a utility grid during and after formation of the locally formed grid, i.e. to determine whether the locally formed grid or the utility grid is present at their terminals. Throughout the present disclosure, the terms "local grid" and "locally formed grid" can be interchanged and are used to denote a grid that is formed by e.g. one or more wind turbines when a wind farm is disconnected from the utility grid. I.e. electrical power that may be received and/or detected by other wind turbines is generated independently from the utility grid.

### SUMMARY

In an aspect of the present disclosure, a method for operating a wind farm comprising a wind farm grid and a plurality of wind turbines connected to the wind farm grid is provided. The method comprises operating one or more first wind turbines of the plurality of wind turbines to generate electrical power with predetermined electrical characteristics when the wind farm is disconnected from a utility grid, and delivering the electrical power with the predetermined electrical characteristics to the wind farm grid. The method further comprises one or more second wind turbines of the plurality of wind turbines detecting the electrical power delivered to the wind farm grid, and determining that the wind farm is disconnected from the utility grid by identifying the predetermined electrical characteristics.

According to this aspect, the one or more second wind turbines may be able to determine whether they are electrically connected to the utility grid or whether a local grid is present at their terminals by receiving the electrical power with predetermined electrical characteristics from the first wind turbines.

In this way, the second wind turbines may quickly and reliably identify which electrical grid they have at their terminals and act in consequence. For example, if they detect that they are electrically connected to the local grid, they may avoid injecting electric power in the wind farm grid. The method may be particularly useful when communication with a wind farm controller has been lost, and for example the second wind turbines do not know which electrical grid is present at their terminals because they cannot receive this information from the wind farm controller.

Throughout this disclosure, a utility grid may be understood as an electrical grid comprising e.g. an interconnected group of power lines and associated equipment for moving electric energy between the point of interconnection of a wind farm and points at which it is delivered, e.g. to loads such as households, industrial plants, and other customers. Different power plants may be connected to the utility grid besides one or more wind farms, e.g. solar power plants, hydropower plants, nuclear power plants and others. The utility grid may be an electrical grid external to the wind farm.

Throughout this disclosure, a wind farm grid may be understood as an electrical grid within a wind farm, including e.g. a number of the wind turbines of the wind farm. An electrical power may circulate within the wind farm grid. One or more suitable auxiliary power sources such as diesel generators may help to power or energize the wind farm grid in some examples. The wind farm grid may therefore be an electrical grid that is internal to the wind farm. In some examples, a substation may form part of the wind farm grid.

When a wind turbine is (electrically) disconnected from the utility grid, it may be understood that a wind turbine is not supplying or obtaining electric power to/from the utility grid, either because a circuit breaker is opened or otherwise. When one or more wind turbines get disconnected from the utility grid, they may form a local grid. For example, a portion of the wind farm grid may be energized by one or more wind turbines of the wind farm and a local grid may be formed.

In a further aspect of the present disclosure, a method for determining whether a wind turbine has a locally formed grid present at its terminals is provided. The method comprises detecting, by the wind turbine, an electrical signal sent by another wind turbine. The method further comprises identifying, based on the detected electrical signal, that the locally formed grid is present at the terminals of the wind turbine.

Accordingly, a wind turbine can determine that energy is being provided by another wind turbine instead of being obtained from the utility grid.

In yet a further aspect of the present disclosure, a first wind turbine is provided. The first wind turbine is configured to generate electrical power, e.g. a power signal or a voltage signal, with predetermined electrical characteristics when a wind farm is disconnected from a utility grid, and to deliver the electrical power with the predetermined electrical characteristics to a wind farm grid such that the predetermined electrical characteristics are identifiable by a second wind turbine as different from electrical power delivered by the utility grid to the wind farm grid.

In yet a further aspect of the present disclosure, a second wind turbine is provided. The second wind turbine is configured to detect an electrical power, e.g. a power signal or a voltage signal, with predetermined electrical characteristics delivered to a wind farm grid by a first wind turbine, and to determine that the wind farm is disconnected from the utility grid by identifying the predetermined electrical characteristics. The predetermined electrical characteristics are different from an electrical power delivered by the utility grid to the wind farm grid.

In a further aspect of the present disclosure, a wind farm is provided. The wind farm comprises a wind farm grid. The wind farm further comprises one or more first wind turbines configured to generate electrical power with predetermined electrical characteristics when the wind farm is disconnected from a utility grid, and to deliver the electrical power with the predetermined electrical characteristics to the wind farm grid. The wind farm further comprises one or more second wind turbines configured to configured to detect the electrical power delivered to the wind farm grid, and to determine that the wind farm is disconnected from the utility grid by identifying the predetermined electrical characteristics.

### BRIEF DESCRIPTION OF THE DRAWINGS

Figure 1 illustrates a perspective view of one example of a wind turbine;
Figure 2 illustrates a simplified, internal view of one example of the nacelle of the wind turbine of the figure 1;
Figure 3 schematically illustrates an example of a wind farm;
Figure 4 shows a flow chart of an example for a method of operating a wind farm; and
Figure 5 shows a flow chart of an example of a method for determining whether a wind turbine has a local grid present at its terminals.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

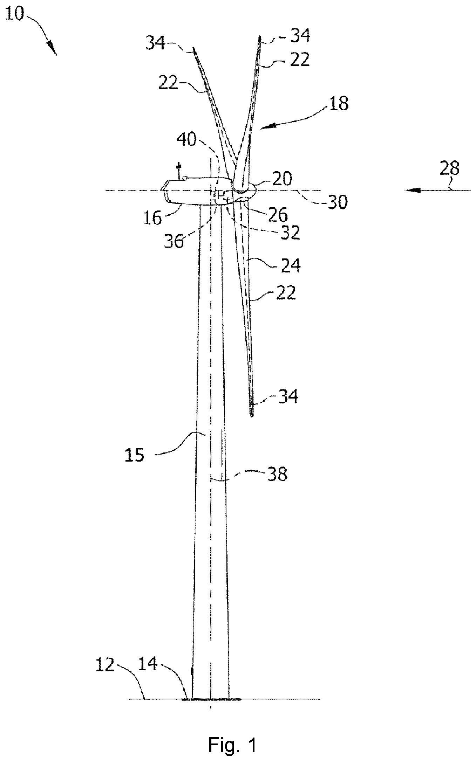

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root region 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, e.g. an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a yaw direction of the nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed control system throughout the wind turbine 10, on the support system 14, within a wind farm, and/or at a remote-control center. The wind turbine controller 36 may include one or more processors configured to perform one or more of the steps of the methods described herein. Further, many of the other components described herein include one or more processors. The wind turbine controller 36 may also include a memory, e.g. one or more memory devices. As used herein, a memory may comprise memory element(s) including, but not limited to, a computer readable medium (e.g., random access memory (RAM)), a computer readable non-volatile medium (e.g., a flash memory), a floppy disk, a compact disc-read only memory (CD-ROM), a magnetooptical disk (MOD), a digital versatile disc (DVD) and/or other suitable memory elements.

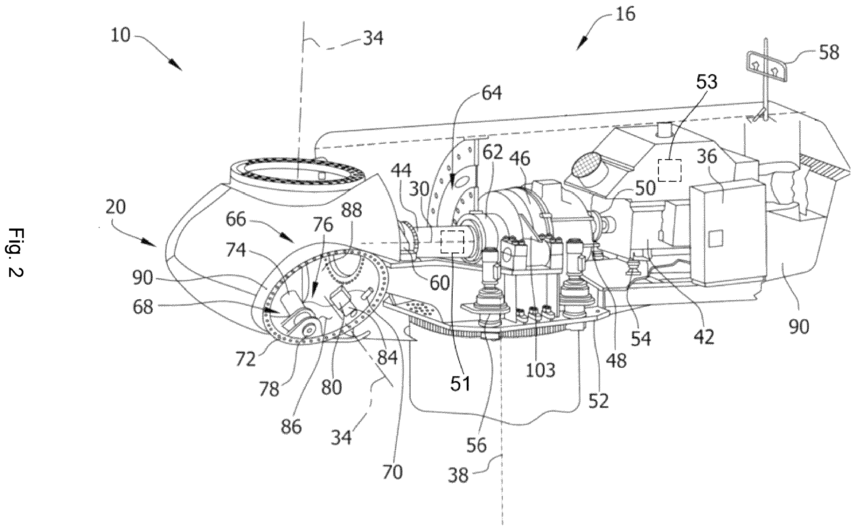

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between e.g. 400V to 1000 V into electrical energy having medium voltage (e.g. 10 - 35 kV). Offshore wind turbines may have for example generator voltages between 650 V and 3500 V, and transformer voltages may for instance be between 30 kV and 70 kV. Said electrical energy is conducted via power cables from the nacelle 16 into the tower 15.

In some examples, the wind turbine 10 may include one or more shaft sensors 51. The shaft sensors may be configured to monitor at least one of torque loads acting on the main shaft 44 and/or the high-speed shaft 48, and a rotational speed of the shaft 44, 48. In some examples, the wind turbine 10 may include one or more generator sensors 53. The generator sensors may be configured to monitor at least one of a rotational speed of the generator 42 and a generator torque. Shaft sensors 51 and/or generator sensors 53 may include, for instance, one or more torque sensors (e.g., strain gauges or pressure sensors), optical sensors, accelerometers, magnetic sensors, speed sensors and Micro-Inertial Measurement Units (MIMUs).

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, support 52, and forward support bearing 60 and aft support bearing 62, are sometimes referred to as a drive train 64.

In some examples, the wind turbine may be a direct drive wind turbine without gearbox 46. Generator 42 operates at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 may also include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system which may include a wind vane and an anemometer. The meteorological measurement system 58 can provide information to the wind turbine controller 36 that may include wind direction 28 and/or wind speed.

In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electric power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power source 84 provides power to the pitch assembly 66 only during an electric power loss event of the wind turbine 10. The electric power loss event may include power grid loss or dip, malfunctioning of an electrical system of the wind turbine 10, and/or failure of the wind turbine controller 36. During the electric power loss event, the power generator 84 operates to provide electric power to the pitch assembly 66 such that pitch assembly 66 can operate during the electric power loss event.

In the example, the pitch drive system 68, the sensor 70, the pitch control system 80, cables, and the power source 84 are each positioned in a cavity 86 defined by an inner surface 88 of hub 20. In an alternative embodiment, said components are positioned with respect to an outer surface of hub 20 and may be coupled, directly or indirectly, to the outer surface.

As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein.

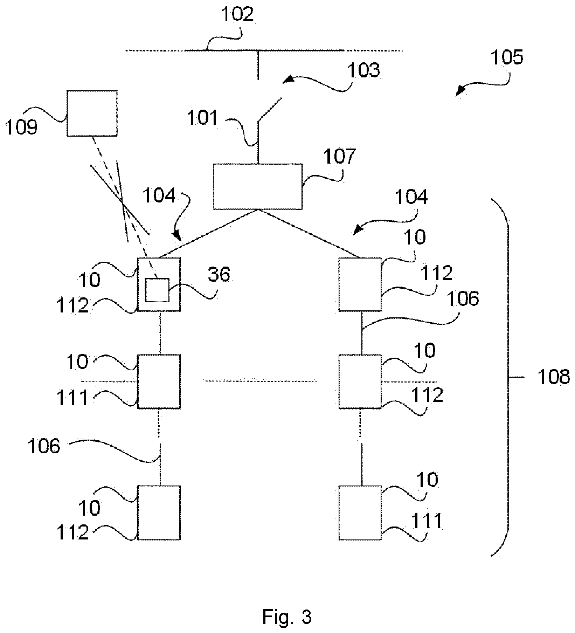

Figure 3 schematically illustrates an example of a wind farm 105, e.g. an offshore wind farm, in which methods 100 and 200 (later illustrated herein) may be implemented. The wind farm 105 comprises a plurality of wind turbines 10 connected to an electrical grid 102, i.e. the utility grid 102, at a point of interconnection (POI) 103. The connection between the utility grid 102 and a wind farm busbar 101 may be regulated by a switch at the POI 103. The wind turbines 10 of the wind farm may be arranged in clusters, for example in strings. Strings 104 are shown in figure 3, but other types of clusters are possible. The electric power generated by each wind turbine 10 can be transmitted to the wind farm busbar 101 via one or more cluster busbars 106, e.g. string busbars. Each wind turbine 10 may be connected to or disconnected from a corresponding cluster busbar 106 via one or more switches or breakers.

The wind farm 105 may comprise a substation 107 including e.g. wind farm transformers configured to convert power from a wind farm voltage to a utility grid voltage. Each cluster busbar 106, e.g. each string busbar, may be connected to or disconnected from the wind farm busbar 101 via one or more switches or breakers. In some examples, the switches or breakers may be arranged at the substation.

The generator 42 of a corresponding wind turbine 10 produces AC (alternating current) power of variable frequency due to varying wind conditions. A power converter may be provided for adjusting the power output from the generator 42 to one suitable for the utility grid 102, e.g. to an AC power having fixed frequency. The power converter may comprise a machine-side converter, a line-side converter and a DC (direct current) link connecting the machine-side and the line-side converter (not shown).

The generator 42 of the wind turbine 10 may be a permanent magnet generator comprising a generator rotor carrying a plurality of permanent magnets and a stator in some examples. The permanent magnet generator may be directly driven by the wind turbine rotor 18. The stator of the generator may be connected to the machine-side converter, which may be configured to convert the received AC voltage to DC voltage, the DC voltage then being delivered to the DC-link. The line-side converter may be configured to convert the DC voltage from the DC-link into a fixed frequency AC voltage.

The line-side converter may be connected to the cluster busbar 106 through a main transformer. The main transformer may be configured to step-up the voltage delivered by the power converter, e.g. to 33 kV. The main transformer may be installed within the nacelle 16 or the tower 15 of the wind turbine in some examples. The main transformer may be arranged at other suitable places in other examples.

In the example of figure 3, the main transformer may be configured to receive electric power from the utility grid 102. The utility grid 102 may be configured to provide electric power to the wind farm busbar 101 and to the cluster busbars 106 in normal operation.

If electrical connection with the utility grid 102 is lost, the wind farm 105, e.g. a portion of the wind farm, may enter and start to operate in a so-called island mode. Throughout this disclosure, the term "island mode" may refer to a mode of operation in which one or more wind turbines 10 are configured to operate independently from the utility grid 102, for example when the wind turbines are not capable of obtaining electric power from the utility grid. The wind turbines operating in island mode may form a local grid. For example, these wind turbines may be electrically connected among them because at least one of them has energized e.g. a portion of the wind farm grid. In some examples, one or more wind turbines 10 may be unable to receive electric power from the utility grid 102 due to the fact that a physical connection between the wind turbines 10 and the utility grid 102 is missing, e.g. because a busbar or some cables are damaged or broken, or other reasons such as electrical faults and others, may prevent that the wind turbines 10 obtain power from the utility grid 102.

In island mode, electric power for keeping operative auxiliary systems including e.g. one or more of communication systems, temperature and ventilation regulation systems, bearing lubrication systems, controller systems and navigation lights or others, may be obtained from auxiliary power sources besides from one or more wind turbines whose rotor rotates to generate it. The terms auxiliary power source(s) may also be referred to as auxiliary energy storage device(s) or auxiliary energy storage system(s).

A wind farm controller 109 may be communicatively coupled to the wind turbine controllers 36 of the wind turbines 10 for controlling their operation in island mode. If communication with the wind farm controller 109 is lost, problems such as undesired injection of power into the wind farm grid 108 may arise. Figure 3 schematically illustrates how a communication between the wind farm controller 109 and the controller 36 of a second wind turbine 112 has been lost.

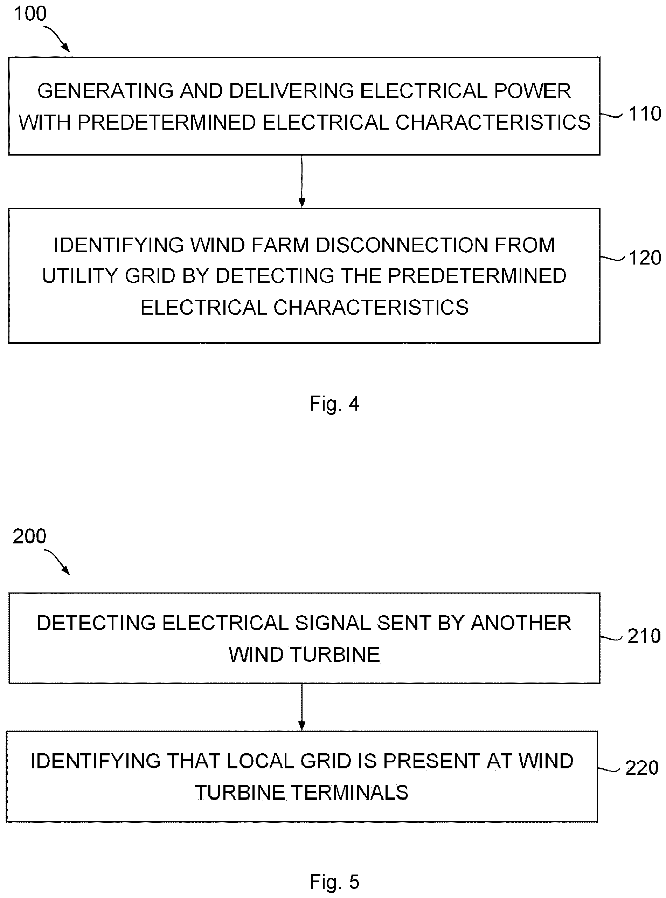

In an aspect of the present disclosure, a method 100 for operating a wind farm comprising a wind farm grid 108 and a plurality of wind turbines 111, 112 connected to the wind farm grid 108 is provided. Method 100 is schematically shown in the flow chart of figure 4. The method comprises, at block 110, operating one or more first wind turbines 111 of the plurality of wind turbines to generate electrical power with predetermined electrical characteristics when the wind farm 105 is disconnected from a utility grid 102, and delivering the electrical power with the predetermined electrical characteristics to the wind farm grid 108. The method further comprises, at block 120, one or more second wind turbines 112 of the plurality of wind turbines detecting the electrical power delivered to the wind farm grid 108, and determining that the wind farm 105 is disconnected from the utility grid 102 by identifying the predetermined electrical characteristics.

Detecting the electrical power with predetermined electrical characteristics may therefore mean that the second wind turbines 112 are electrically connected to the wind farm grid 108 and a local grid is present at their outputs. Whereas detecting electrical power but without predetermined electrical characteristics may mean that the second wind turbines are electrically connected to the utility grid 102 instead and that the second wind turbines may receive power from the utility grid 102. Therefore, the second wind turbines 112 can differentiate which grid is present at their terminals in a simple, effective and reliable manner. The electrical power may be sent through one or more cables or busbars 106 which connect the first wind turbines 111 with the second wind turbines 112.

The first wind turbines 111 may be grid forming wind turbines configured to energize the wind farm grid 108, e.g. a portion of the wind farm grid 108. For example, the grid forming wind turbines may be configured to detect that a local grid is to be formed, e.g. that a portion of a wind farm grid is to be energized. In some examples, a wind farm controller 109 may indicate this to the grid forming wind turbines. In other examples, one or more of the grid forming wind turbines may be configured to detect this without the wind farm controller. The second wind turbines 112 may be non-grid forming wind turbines. The second wind turbines may be configured to follow the indications of a wind farm controller and of the first wind turbines 111.

In some examples, if a first wind turbine is unable to perform a leader role as a grid forming wind turbine, e.g. because it is damaged, a second wind turbine which was initially assigned a follower role as non-grid forming wind turbine may assume instead a leader role. I.e., redundancy may be provided such that one or more second wind turbines may assume a grid forming role if deemed necessary.

The one or more second wind turbines 112 may perform the detection and the determination after losing communication with the wind farm controller 109. The electrical power with predetermined electrical characteristics may be generated and delivered to the wind farm grid regardless one or more first wind turbines 111 and/or one or more second wind turbines 112 have lost communication with the wind farm controller 109. This is due to the fact that the first wind turbines 111 may not know whether one or more second wind turbines 112 have lost communication with the wind farm controller. Therefore, electric power with predetermined electrical characteristics may be generated and delivered to the wind farm grid continuously once the wind farm has been disconnected from the utility grid 102.

In some examples, the wind farm controller 109 may initially indicate to the second wind turbines 112 whether they are connected to the utility grid 102 or not. But if for any reason the communication is lost between the wind farm controller 109 and the second wind turbines 112, the first wind turbines 111 may (indirectly) assume that task of the wind farm controller so that the second wind turbines do not inject electric power in the wind farm grid.

It may happen that one or more of the second wind turbines may keep communication with the wind farm controller. For example, if wind turbines are arranged in clusters 104, e.g. in strings, it may happen that some second wind turbines of a cluster can communicate with the wind farm controller, and that some other second wind turbines of the cluster cannot. The second wind turbines which cannot communicate with the wind farm controller may rely of the electrical power with predetermined electrical characteristics, whereas the second wind turbines which can still communicate with the wind farm controller may receive redundant information in some examples.

The characteristics of the electrical power may be such that the second wind turbines 112 are able to detect it and not to confuse it with other signals. In some examples, the second wind turbines 112 may identify that the local grid is present at their terminals after they have detected the electrical power during a certain period of time, e.g. with a duration above a certain threshold. In these or other examples, the second wind turbines may identify that the local grid is present at its terminals after they have detected a certain number of predetermined characteristics, e.g. that a predetermined characteristic has been detected two, three or more times. In other examples, a single detection may be sufficient.

The predetermined electrical characteristics may comprise a ripple. E.g., the electrical power may have a high amplitude and/or a high frequency such that it can be differentiated from other electrical power that the second wind turbines may receive from the utility grid. For example, the signal of electrical power may have a frequency different from the frequency of the utility grid 102. The predetermined electrical characteristic may comprise a non-fundamental harmonic which is not present in the utility grid in some examples. In this regard, an electrical power signal sent by the first wind turbines may be modulated in a specific manner such that it can be recognized by the second wind turbines.

The predetermined electrical characteristics may comprise a voltage, i.e. the electrical power signal may be a voltage signal. As the frequency and the voltage of the island should be controlled, sending a voltage signal may be easy. As indicated above, the amplitude and/or frequency of the electrical power, e.g. of the voltage signal, may be modified, e.g. modulated. The predetermined electrical characteristics may comprise a predetermined voltage level or a predetermined time-varying voltage level in some examples.

Predetermined electrical characteristics may be specific electrical characteristics which the first 111 and second 112 wind turbines know in advance, e.g. an electrical signature. For example, the first and second wind turbines may be configured to send and receive/identify an electrical power with such predetermined characteristics, respectively, before the first and second wind turbines start its operation for the first time, e.g. they may be configured during commissioning or even before, e.g. in the factory.

As mentioned previously, the one or more first wind turbines and the one or more second wind turbines may be arranged in one or more clusters 104, for example in one or more strings. The wind turbines of each of the clusters, e.g. of each string, may be connected through one or more cables 106. Such cables may be referred to as cluster busbars, array cables or offshore sea cables in some examples. A first wind turbine 111 of each cluster 104 may generate and deliver the electrical power to be detected by the one or more second wind turbines 112 of that cluster 104 in some examples.

For instance, each cluster 104 may comprise one first wind turbine 111 which is configured to generate and deliver the electrical power to the wind farm grid such that other wind turbines 112 of the corresponding cluster can detect it, e.g. if communication with the wind farm controller 109 is lost. In other examples, not all the clusters need a first wind turbine.

The method may further comprise the one or more second wind turbines refraining from generating power when they identify the predetermined electrical characteristics. I.e., the one or more second wind turbines may not generate power in such a scenario. As the second wind turbines correctly identify that the utility grid 102 has not yet been restored, they do not accidentally start in power generation mode.

In another aspect of the present disclosure, a first wind turbine 111 and a second wind turbine 112 that are configured to perform one or more of the steps of the methods 100, 200 disclosed herein as appropriate, and in general to operate as described herein, are disclosed. The first wind turbine 111 is configured to generate electrical power with predetermined electrical characteristics when a wind farm 105 is disconnected from a utility grid 102, and to deliver the electrical power with the predetermined electrical characteristics to a wind farm grid 108 such that the predetermined electrical characteristics are identifiable by a second wind turbine as different from electrical power delivered by the utility grid 102 to the wind farm grid 108.

The first wind turbine 111 may be further configured to generate electrical power with second electrical characteristics when the first wind turbine 111 is connected to the utility grid. For example, the first wind turbine may not introduce a ripple in the power signal it generates during normal operation of the wind turbine.

Likewise, the second wind turbine 112 is configured to detect the electrical power delivered to the wind farm grid 108 with predetermined electrical characteristics by the first wind turbine 111, and to determine that the wind farm 105 is disconnected from the utility grid 102 by identifying the predetermined electrical characteristics. The first 111 and second 112 wind turbines may comprise a control system 36 configured to carry out the steps of the methods described herein. The electrical power with predetermined electrical characteristics is different from an electrical power delivered by the utility grid to the wind farm grid.

In this manner, the second wind turbine 112 can identify whether energy is being provided by the utility grid 102 or by a first wind turbine 111, e.g. if communication with the wind farm controller 109 is lost.

The first 111 and second 112 wind turbines may be onshore wind turbines in some examples and they may be offshore wind turbines in other examples.

In a further aspect of the present disclosure, a wind farm 105 is provided. The wind farm 105 comprises a wind farm grid 108. The wind farm further comprises one or more first wind turbines 111 configured to generate electrical power with predetermined electrical characteristics when the wind farm is disconnected from a utility grid 102, and to deliver the electrical power with the predetermined electrical characteristics to the wind farm grid 108. The wind farm further comprises one or more second wind turbines 112 configured to detect the electrical power delivered to the wind farm grid 108, and to determine that the wind farm is disconnected from the utility grid 102 by identifying the predetermined electrical characteristics.

The one or more first wind turbines 111 may be configured to generate the electrical power with the predetermined electrical characteristics in a continuous manner while they detect that they wind farm 105 is disconnected from the utility grid 102. The power with the predetermined electrical characteristics may be generated until connection with the utility grid 102 is regained.

The one or more second wind turbines 112 may be configured to not generate power when they detect that the local grid is present at their terminals.

The first wind turbines 111 may be grid forming wind turbines, and the second wind turbines 112 may be non-grid forming wind turbines.

The wind farm 105 may be an onshore wind farm in some examples and the wind farm may be an offshore wind farm in other examples.

The wind farm 105 may comprise one or more clusters 104, and each of the clusters may comprise a first wind turbine 111 configured to send electrical power to one or more second wind turbines 112. The one or more clusters 104 may be arranged along strings.

The wind farm 105 may further comprise a wind farm controller 109 configured to communicate with the first 111 and/or second 112 wind turbines.

Previous explanations regarding method 100 may be combined and applied to this aspect, and *vice versa.*

In a further aspect of the disclosure, a method 200 for determining whether a wind turbine 112 has a locally formed grid present at its terminals, optionally when communication with a wind farm controller 109 is lost, is provided. Method 200 is shown in the flow chart of figure 5. Aspects and explanations with respect to method 100 may be combined and applied to method 200 and *vice versa.* The method comprises detecting, by the wind turbine, an electrical signal sent by another wind turbine.

The method comprises, at block 210, detecting, by the wind turbine 112, an electrical signal sent by another wind turbine 111. The method comprises, at block 220, identifying, based on the detected electrical signal, that the locally formed grid is present at the terminals of the wind turbine.

For example, the wind farm grid 108 being electrically disconnected from the utility grid 102 may comprise one or more first wind turbines 111 and one or more second wind turbines 112. The first wind turbines 111 may send an electrical signal, and the one or more second wind turbines 112 may detect the electrical signal and identify that they the local grid is present at their terminals.

The electrical signal may be detected through a cable or busbar 106 which connects the two wind turbines 111, 112. The two wind turbines may belong to a same cluster 104 of wind turbines, e.g. to a same string of wind turbines.

The electrical signal may be a signal having a different amplitude and/or frequency of other electrical signals that a utility grid 102 provides when the wind turbine is connected to the utility grid. The electrical signal may be a modulated signal, e.g. a modulated voltage signal.

The wind turbine may refrain from operating (generating electrical power) when the locally formed grid is identified at its terminals.

The wind turbine may generate only reactive power when the local formed grid is identified.

The wind turbine may not receive control signals from a wind farm controller 109, e.g. during at least a duration of the method.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method (100) for operating a wind farm (105) comprising a wind farm grid (108) and a plurality of wind turbines (10) connected to the wind farm grid (108), the method comprising:
operating (110) one or more first wind turbines (111) of the plurality of wind turbines to generate electrical power with predetermined electrical characteristics when the wind farm (105) is disconnected from a utility grid (102), and delivering the electrical power with the predetermined electrical characteristics to the wind farm grid (108); and
one or more second wind turbines (112) of the plurality of wind turbines detecting (120) the electrical power delivered to the wind farm grid (108), and determining that the wind farm (105) is disconnected from the utility grid (102) by identifying the predetermined electrical characteristics.

2. The method of claim 1, wherein the first wind turbines (111) are grid forming wind turbines configured to energize the wind farm grid (108) and wherein the second wind turbines (112) are non-grid forming wind turbines.

3. The method of claim 1 or claim 2, wherein the one or more second wind turbines (112) perform the detection and the determination (120) after losing communication with a wind farm controller (109).

4. The method of any of claims 1-3, wherein the predetermined electrical characteristics comprise a ripple.

5. The method of any of claims 1-4, wherein the predetermined electrical characteristics comprise a frequency different from a frequency of the utility grid (102).

6. The method of any of claims 1-5, wherein the predetermined electrical characteristics comprise a non-fundamental harmonic which is not present in the utility grid (102).

7. The method of any of claims 1-6, wherein the predetermined electrical characteristics comprise a predetermined voltage level.

8. The method of any of claims 1-7, wherein the predetermined electrical characteristics comprise a predetermined time-varying voltage level.

9. The method of any of claims 1 - 8, further comprising the one or more second wind turbines (112) refraining from generating electrical power, when they identify the predetermined electrical characteristics.

10. A first wind turbine (111), wherein
the first wind turbine (111) is configured to generate electrical power with predetermined electrical characteristics when a wind farm (105) is disconnected from a utility grid (102), and wherein
the first wind turbine (111) is further configured to deliver the electrical power with the predetermined electrical characteristics to a wind farm grid (108) such that the predetermined electrical characteristics are identifiable by a second wind turbine (112) as different from electrical power delivered by the utility grid (102) to the wind farm grid (108).

11. The first wind turbine of claim 10, wherein the first wind turbine (111) is further configured to generate electrical power with second electrical characteristics when the first wind turbine (111) is connected to the utility grid (102).

12. A wind farm (105) comprising:
a wind farm grid;
one or more of the first wind turbines (111) according to claim 10 or 11, and further comprising
one or more second wind turbines (112) configured to detect the electrical power delivered to the wind farm grid (108), and to determine that the wind farm (105) is disconnected from the utility grid (102) by identifying the predetermined electrical characteristics.

13. The wind farm of claim 12, comprising one or more clusters (104), wherein each of the clusters (104) comprises a first wind turbine (111) configured to send electrical power to one or more second wind turbines.

14. The wind farm of claim 13, wherein the one or more clusters (104) are arranged along strings.

15. The wind farm of any of claims 12 - 15, further comprising a wind farm controller (109) configured to communicate with the first (111) and/or second (112) wind turbines.
